# EUROPEAN PATENT SPECIFICATION

(11) **EP 0 481 468 B1**
(45) Date of publication and mention of the grant of the patent: **09.04.1997**
(21) Application number: 91117684.0
(22) Date of filing: 16.10.1991
(51) Int. Cl.: G11B 23/087, G11B 23/113, G11B 23/04, B29C 45/00

(54) **Magnetic tape cassette and method of molding the same**
Magnetbandkassette und Formverfahren zu ihrer Herstellung
Cassette à bande magnétique et méthode pour mouler cette dernière

(30) Priority: 17.10.1990 JP 276390/90
(43) Date of publication of application: 22.04.1992
(73) Proprietor: FUJI PHOTO FILM CO., LTD., Kanagawa (JP)
(72) Inventor: Suzuki, Osamu, c/o Fuji Photo Film Co., Ltd., Odawara-shi, Kanagawa (JP)
(74) Representative: Grünecker, Kinkeldey, Stockmair & Schwanhäusser Anwaltssozietät

(56) References cited:
- DE-A- 1 905 331
- DE-U- 8 712 443
- US-A- 2 868 759
- PATENT ABSTRACTS OF JAPAN vol. 8, no. 245 (P-312)(1682) 10 November 1984;& JP-A-59117768
- PATENT ABSTRACTS OF JAPAN vol. 8, no. 73 (M-287)5 April 1984;& JP-A-58220714
- Derwent Publications Ltd., London, GB; AN 85-150439;& JP-A-58220714
- PATENT ABSTRACTS OF JAPAN vol. 14, no. 407 (M-1019)4 September 1990;& JP-A-2155724
- PATENT ABSTRACTS OF JAPAN vol. 12, no. 437 (M-765)17 November 1988;& JP-A-63172624
- PATENT ABSTRACTS OF JAPAN vol. 10, no. 14 (M-447)21 January 1986;& JP-A-60174617

## Description

The present invention relates to a magnetic tape cassette having improved vibration resistance and rigidity, and a higher recording efficiency.

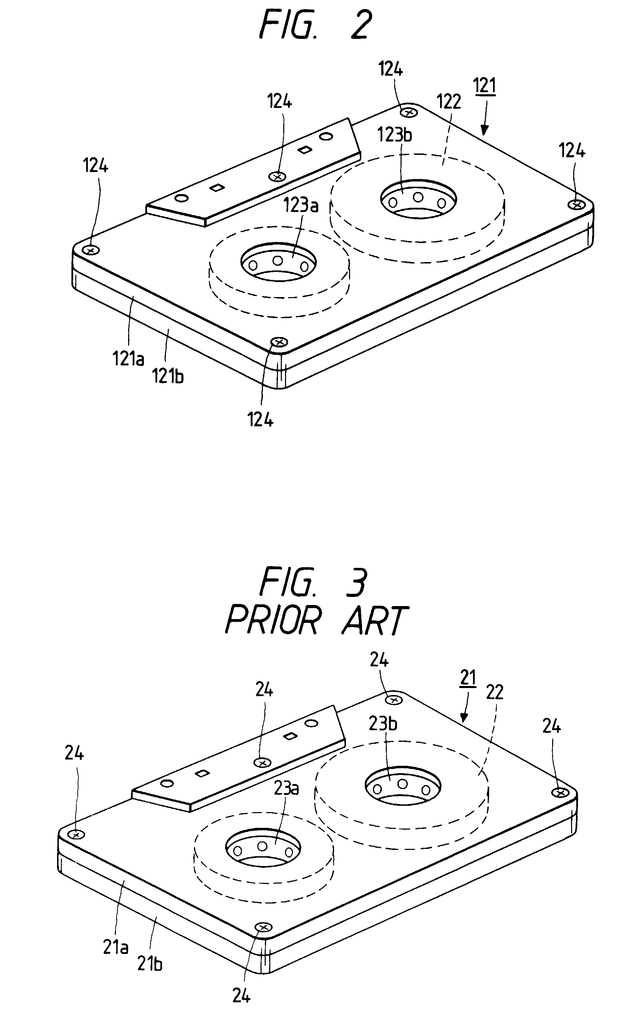

Magnetic tape cassettes have been previously used as a recording/reproducing medium for audio units, such as audio tape recorders, and video units, such as video tape recorders. FIGURE 3 illustrates a conventional audio tape cassette.

Magnetic tape cassette 21 is constructed such that a pair of hubs 23a and 23b, having magnetic tape 22 wound therearound, are rotatably mounted in a cassette body composed of upper and lower cassette halves 21a and 21b. Upper and lower cassette halves 21a and 21b are held together with screws 24 located at the four corners thereof so as to constitute a single cassette body. Upper and lower cassette halves 21a and 21b and hubs 23a and 23b are molded of a synthetic resin such as an acrylnitril butadienstyrene copolymer resin (hereinafter referred to as an ABS resin), a polyoxymethylene resin (hereinafter referred to as an ABS resin), or the like, using an injection molding process.

However, when a signal recording/reproducing operation is performed using magnetic tape cassette 21 of such a conventional design, a modulated noise can often be generated due to vibration of the cassette 21 by a driving device in the tape recorder. Accordingly, the sound tone is adversely affected.

In addition, because of the flexibility of ABS resins, guide pins integrally molded as a part of the upper and lower cassette halves 21a and 21b can undesirably be bent under the effect of a tensile force derived from magnetic tape 22. This causes an inclination of the azimuth of magnetic tape 22 relative to a magnetic head, resulting in adverse effects in the reproduced sound within the high-pass range.

Additionally, hubs 23a and 23b when molded of a POM resin or the like may be deformed due to thermal contraction induced by variations in ambient temperature, tight winding of magnetic tape 22, or the like. This hinders rotation of hubs 23a and 23b.

In view of the foregoing problems, a proposal has been made, as disclosed in Japanese Laid-Open Patent No. 117768/1984, whereby the specific weight and rigidity of cassette halves 21a and 21b are increeased by adding a filler of pulverized metal compound to the synthetic resin to be used as a raw material for upper and lower cassette halves 21a and 21b, resulting in a strengthened cassette. Such a cassette is less affected by vibration, and inclination of the guide pins is minimized so as to improve the stability of the magnetic tape.

However, it has been found that sufficient high frequency properties cannot be obtained with a magnetic tape cassette molded of a synthetic resin with a filler such as a composite material or the like added thereto. In addition, when a molding resin is added with pulverized metal, it is difficult to uniformly mix the pulverized metal compound with the molding resin. Accordingly, it is difficult to obtain a desired specific weight and rigidity of the cassette halves based upon the addition of pulverized metal compound. If a large quantity of filler and pulverized metal comp. is added to the molding resin, the cassette halves are low in shock resistance, and therefore the cassette can be readily broken upon impact. This is due to poor bonding of the interface of the resin and the pulverized metal.

JP-A-58-220714 describes an injection molding by adding a metal alloy having a low melting point serving as a conductive filler material to a thermoplastic resin for molding a product such as a container for a microprocessor, which product is capable of shielding electromagnetic waves.

Accordingly, an object of the present invention is to provide a magnetic tape cassette having not only excellent shock resistance, but also excellent high frequency properties, wherein the specific weight and rigidity of each molded product can be predeterminately changed, and, moreover, recording/reproducing operations can be performed at a high efficiency.

Another object of the present invention is to provide a method of molding a magnetic tape cassette of the foregoing type.

The above-stated first object of the present invention is achieved by the subject matter of claim 1.

The above-stated second object of the present invention is achieved by the subject matter of claim 4.

It should be noted that a Bi(56)-Sn(40)-Zn(4) alloy, a rose alloy, a neuton alloy, a dulsey alloy, a wood alloy, a repowitz alloy, an anatomical alloy, an onion alloy, a coloro alloy, a seromatrix alloy, a malotte alloy, or the like, can be used as a metallic material employable as pulverized metal having a melting temperature lower than that of the molding resin.

### BRIEF DESCRIPTION OF THE DRAWINGS

FIGURE 1 is a sectional view of an injection molding machine for performing the process of the subject invention;
FIGURE 2 is a perspective view of a cassette of the preferred embodiment; and
FIGURE 3 is a perspective view of a conventional cassette.

### DETAILED DESCRIPTION OF THE PREFERRED EMBODIMENTS

The present invention will now be described in detail with reference to the accompanying drawings which illustrate a preferred embodiment of the present invention.

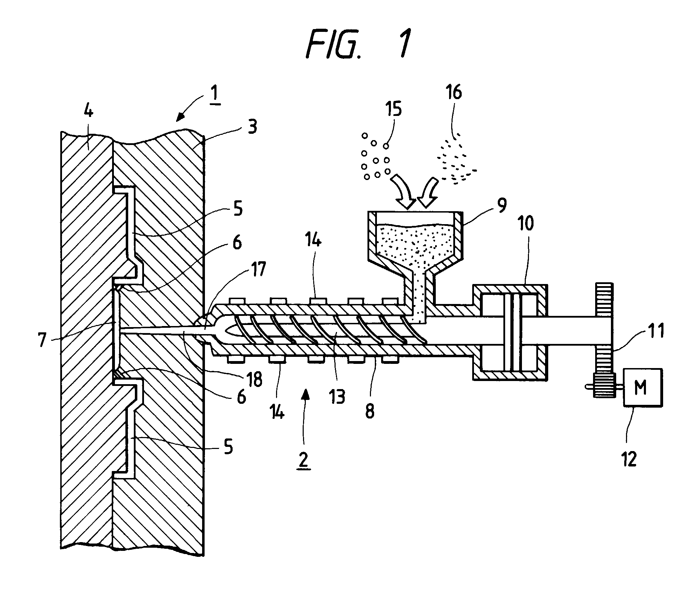

FIGURE 1 illustrates the structure of an injection molding machine for molding a cassette in accordance with the present invention. The magnetic tape cassette 121 of the present invention is illustrated in FIGURE 2. As shown in FIGURE 1, the injection molding machine is essentially composed of cassette half injection molding die 1 and injection molding unit 2.

Cassette half injection molding die 1 is composed of stationary die half 3 and movable die half 4. Die cavity 5, for molding upper cassette half 121a, shown in FIGURE 2, is formed in stationary die half 3. Die cavity 5 communicates with submarine gates 6 through which a molten resin is injected. With this construction, the molten resin is injected into die cavity 5 from the outside via sprue 18, runner 7, and submarine gates 6.

Injection molding unit 2 is a so-called screw-type injection molding unit, and includes heating cylinder 8 for heating and melting a resin to be molded. Screw 13 injects a molten resin into die cavity 5 while kneading the molten resin. Hydraulic cylinder 10 imparts an injecting force to screw 13, while hydraulic motor 12 imparts a rotational force to screw 13 via speed reduction unit 11. Hopper 9 feeds resin to heating cylinder 8.

According to the preferred embodiment of the present invention, a mixture of polystyrol resin pellets 15 and pulverized Bi(56)-Sn(40)-Zn(4) alloy 16 is used as a raw material for molding the upper cassette half 121a. It should be noted that the melting temperature of pulverized Bi(56)-Sn(40)-Zn(4) alloy 16 has substantially the same melting temperature of poylstyrol resin pellets 15.

A raw material to be molded, which has been stored in hopper 9, freely falls down into heating cylinder 13 and is conveyed toward the foremost end of heating cylinder 8 along the groove between adjacent spirally extending blades of screw 13 while it is kneaded as screw 13 is rotationally driven. While the molding material is conveyed in the above-described manner, it is heated by heater 14 arranged along the outer peripheral surface of heating cylinder 8, in addition to frictional heat generated during the kneading operation in heating cylinder 8. Thus, the temperature of the molding material is elevated until the molding material is molten. At such time, pulverized Bi(56)-Sn(40)-Zn(4) alloy 16 is also molten.

As the molten resin is increasingly accumulated in the forward end part of heating cylinder 8, screw 13 is displaced in the rearward direction by a reactive force (back pressure) derived from the molten resin. The quantity of injection of the molten resin is determined by detecting the amount of rearward displacement of screw 13 by a limit switch (not shown) so as to stop rotation of the screw after a predetermined rearward displacement thereof. This corresponds to a predetermined volume of molten resin.

Subsequently, when an injection pressure is imparted to screw 13 from hydraulic cylinder 10, screw 13 serves as an injection cylinder so as to allow the molten resin accumulated at the forward end part of screw 13 to be injected into cassette half injection molding die 1, through nozzle 17, at a high pressure. The molten resin which has been injected into cassette half injection molding die 1 is then introduced into die cavity 5 through submarine gates 6 via sprue 18 and runner 7.

When the molten resin filled in die cavity 5 is cooled and solidified, movable die half 4 is displaced away from stationary die half 3, and molded upper cassette half 121a is ejected from cassette half injection molding die 1 by a plurality of ejecting pins (not shown). It should be noted that lower cassette half 121b is molded in the same manner as upper cassette half 121a.

Since the temperature of pulverized Bi(56)-Sn(40)-Zn(4) alloy 16 mixed with the molding resin of upper cassette half 121a, i.e., polystyrol resin pellets 15, is substantially equalized to the temperature of the polystyrol resin as mentioned above, the pulverized metal is rendered molten as the molding resin filled in heating cylinder 8 is heated by heater 14. Accordingly, the pulverized metal is uniformly mixed with the molding resin in the molten state. For this reason, the specific weight and rigidity of the resulting molded product of upper cassette half 21a can be predeterminately changed by varying the mixing ratio of resin pellets to pulverized alloy so as to achieve desired characteristics.

In addition, since the pulverized metal filled in the molded product of the upper cassette half 121a is made molten and then quickly cooled and solidified, it exhibits a complicated contour having irregular concavities and convexities. Thus, the pulverized metal is dispersed in the molded product so as to be randomly entangled with the molding resin, resulting in the pulverized metal being bonded to the molding resin with a large bonding force. Consequently, the resulting molded product is not significantly weakened, with respect to its response to shocks, by the introduction of pulverized metal in the molding resin.

Therefore, the addition of the pulverized metal to the molding resin in the above-described manner makes it possible to increase the specific weight and rigidity of the cassette halves so as to avoid adverse effects produced by vibration and prevent the guide pins from being undesirably bent. Accordingly, the cassette of the present invention exhibits greater stability during use.

It should be noted that an additive such as an electrical charging preventive agent, an oxidation preventive agent, an ultraviolet-ray blocking agent, or the like, a dispersant and a lubricant may be contained in a molding material composed of polystyrol resin pellets 15 and pulverized Bi(56)-Sn(40)-Zn(4) alloy 16 without introducing significant problems within conventional ranges of content wherein the functions of the molded product are not affected adversely.

It should, of course, be understood that the present invention is not limited to the injection molding machine constructed in the above-described manner. On the contrary, various types of injection molding machines may be employed to carry out the present invention. In addition, the types of resin pellets and pulverized metal used for the molding material should not be limited to those mentioned above. Any suitable kind of resin pellets and pulverized metal may selectively be used to carry out the present invention as long as the galvanized metal melts at a temperature less than or substantially equal to the melting temperature of the resin pellets.

Additionally, hubs 123a and 123b of the cassette of the present invention exhibit a small thermal expansion coefficient and high rigidity, regardless of ambient temperature, as a result of using a molten resin containing pulverized metal having a melting temperature is lower than or substantially equal to that of the molding resin. Hubs 123a and 123b can be molded in a manner similar to that described above relating to cassette halves 121a and 121b. Of course, an appropriate mold must be utilized.

The present invention has been described above with respect to cassette halves for an audio magnetic tape cassette molded in accordance with the preferred embodiment of the present invention. However, the present invention is not be limited to an audio tape cassette. It goes without saying that the present invention may equally be applied to various kinds of molded products such as a video magnetic tape cassette, an optical disc cartridge, or the like.

As described above, according to the present invention, at least one of cassette halves and hubs constituting a magnetic tape cassette is molded using a molding material containing pulverized metal having a melting temperature that is lower than or substantially equal to that of the resin to be molten.

Specifically, since the pulverized metal is molten when the molding resin is molded during the injection molding process, it is uniformly mixed with the molten resin in the molten state. Therefore, the specific weight and rigidity of each resulting molded product can be adjusted by changing the mixing ratio of the pulverized metal to the molding resin pellets.

In addition, since the pulverized metal is filled in the molded product in a molten state and is then rapidly cooled and solidified, contours of the pulverized metal filled in the molding resin exhibit irregular concavities and convexities so that the pulverized metal is randomly entangled with the molding resin. This results in a bonding force of the pulverized metal to the molded product that is sufficiently high. Thus, the resulting molded product has a high resistance to shocks imparted thereto, regardless of the quantity of pulverized metal added to the resin.

Consequently, the present invention provides a magnetic tape cassette, including cassette halves and hubs, having a high strength against shocks and excellent high frequency properties. In addition, the present invention provides a method of producing a magnetic tape cassette of the foregoing type wherein the specific weight and rigidity of each molded product can be predeterminately changed so as to allow a recording/reproducing operation to be performed at a high efficiency.

The aforementioned advantageous effects of the present invention will be described in more detail with reference to the following examples.

The hubs of an audio magnetic tape cassette were molded using a molding material composed of 90 parts by weight of POM resin pellets and 10 parts by weight of pulverized Bi(56)-Sn(40)-Zn(4) alloy in a mixed state. It should be noted that the melting temperature of the POM resin is 165°C and the melting temperature of the pulverized Bi(56)-Sn(40)-Zn(4) alloy is 130°C.

Thereafter, the weight, linear expansion coefficient and bending elastic modulus of the hubs were measured. Also, the winding state of the magnetic tape was visually observed after the hubs were incorporated in the magnetic tape cassette and the ambient temperature was changed from 30°C to 10°C. Results of these measurements are shown in Table 1.

Operative conditions employed for the injection molding operation were determined such that the temperature of the heating cylinder was 190°C, the temperature of the injection molding die was 60°C, for each cycle lasted 0.9 second, and the injection molding pressure (hydraulic pressure in the hydraulic cylinder) was 140 kg/cm².

### (Comparative Example 1)

Hubs for an audio magnetic tape cassette were molded employing an injection molding process in the same manner as that in Example 1, with the exception that the molding material was composed of only POM resin pellets.

The weight, linear expansion coefficient and bending elastic modulus of the hubs were measured. Also, the winding state of the magnetic tape was visually observed after the hubs were incorporated in a magnetic tape cassette as the ambient temperature was changed from 30° to 10°C. Results derived from these measurements are also shown in Table 1.

**Table 1**

| | weight (g) | linear expansion coefficient (cm/cm/°C) | bending elastic modulus (kg/cm²) | winding state of magnetic |
|---|---|---|---|---|
| Example 1 | 3 | 6 X 10⁻⁵ | 28,000 | good |
| Comparative Example | 1 | 9 X 10⁻⁵ | 26,000 | step down took place |

### (Example 2)

Cassette halves for an audio magnetic tape cassette were molded employing an injection molding process using a molding material composed of 70 parts by weight of polystyrol resin pellets and 30 parts by weight of pulverized Bi(56)-Sn(40)-Zn(4) alloy. The melting temperature of the polystyrol resin was 200°C.

The weight and specific weight of the cassette halves were measured. In addition, the elapsed time before reference vibrations having a frequency of 50 Hz imparted to the cassette halves were damped to a level of 70% was measured. Results of these measurements are shown in Table 2.

The operative conditions employed for the injection molding operation were determined such that the temperature of the heating cylinder was 225°C, the temperature of the injection molding die was 40°C, the operation time for each cycle was 1.5 seconds, and the injection pressure (hydraulic pressure in the hydraulic cylinder) was 160 kg/cm².

### (Comparative Example 2)

Cassette halves for an audio magnetic tape cassette were molded employing an injection molding process in the same manner as in Example 2, with the exception that the molding material was composed of only polystyrol resin pellets.

The weight and specific weight of each of the cassette halves were measured. In addition, the elapsed time before reference vibrations having a frequency of 50 Hz imparted to the cassette halves were damped to a level of 70% was measured. Results derived from the measurements are shown in Table 2.

**Table 2**

| | weight (g) | specific weight | damping time (second) |
|---|---|---|---|
| Example 2 | 50 | 1.45 | 1.2 |
| Comparative Example 2 | 32 | 0.90 | 3.2 |

As is apparent from the results obtained from the examples conducted in accordance with the present invention, the thermal contraction rate associated with variation of the ambient temperature could be reduced without deterioration of rigidity of the hubs by molding the hubs utilizing an injection molding process using a molding material composed of a molding resin and pulverized metal having a melting temperature lower than, or substantially equal to, that of the molding resin in a mixed state. In addition, undesirable disturbance of the winding state of a magnetic tape could be reduced. Additionally, vibration resistance of the cassette halves could be improved by employing cassette halves produced by the injection molding process of the present invention.

## Claims

1. A magnetic tape cassette (121) of the type comprising a cassette shell (121a;121b), two hubs (123) rotatably mounted in said cassette shell, and a magnetic tape wound around said hubs, said hubs and said cassette shell being molded from a molding material which comprises a resin material and a pulverized metal containing material,
**characterized in that**
the metal component of said metal containing material is a metal which has a melting temperature that is equal to or lower than the melting temperature of said resin material.

2. The magnetic tape cassette of claim 1, wherein said resin material is polystyrol resin and said pulverized metal is pulverized Bi(56)-Sn(40)-Zn(4).

3. The magnetic tape cassette of claim 1, wherein said resin material contains at least one additive selected from the group consisting of an electrical charging preventing agent, an oxidation preventing agent, a dispersant, and a lubricant.

4. A method of molding a magnetic tape cassette in which a magnetic tape is wound around two hubs which are rotatably mounted in a cassette shell comprising the steps of mixing a predetermined quantity of pulverized metal comprising material with a predetermined quantity of a resin material so as to constitute a molding material, heating said molding material to a molten state, forming a first portion of said molding material into said hubs, and forming a second portion of said molding material into said cassette shell,
**characterized in that**
the metal component of said pulverized metal containing material is a metal which has a melting temperature that is equal to or less than the melting temperature of said resin material.

5. The method of claim 4, wherein said resin material is polystyrol resin and said pulverized metal is pulverized Bi(56)-Sn(40)-Zn(4).

6. The method of claim 4, wherein said resin material contains at least one additive selected from the group consisting of an electrical charging preventing agent, an oxidation preventing agent, a dispersant, and a lubricant.

## Patentansprüche

1. Magnetbandkassette (121) des Typs, der eine Kassettenhülle (121a; 121b), zwei Naben (123), die drehbar in der Kassettenhülle angebracht sind, sowie ein Magnetband umfaßt, das um die Naben gewickelt ist, wobei die Naben und die Kassettenhülle aus einem Formmaterial geformt sind, das ein Harzmaterial und ein Material, das Metallpulver enthält, umfaßt, **dadurch gekennzeichnet**, daß
der Metallbestandteil des metallhaltigen Materials ein Metall ist, dessen Schmelztemperatur der Schmelztemperatur des Harzmaterials entspricht oder darunter liegt.

2. Magnetbandkassette nach Anspruch 1, wobei es sich bei dem Harzmaterial um Polystyrolharz handelt und es sich bei dem Metallpulver um Bi(56)-Sn(40)-Zn(4)-Pulver handelt.

3. Magnetbandkassette nach Anspruch 1, wobei das Harzmaterial wenigstens einen Zusatz enthält, der aus der Gruppe ausgewählt wird, die aus einem Mittel zur Verhinderung von elektrischer Ladung, einem Mittel zur Verhinderung von Oxidation, einem Dispersionsmittel und einem Schmiermittel besteht.

4. Verfahren zum Formen einer Magnetbandkassette, bei der ein Magnetband um zwei Naben gewickelt ist, die drehbar in einer Kassettenhülle angebracht sind, das die Schritte des Mischens einer vorgegebenen Menge von Material, das Metallpulver umfaßt, mit einer vorgegebenen Menge Harzmaterial, um so ein Formmaterial herzustellen, des Erwärmens des Formmaterials bis zu einem geschmolzenen Zustand, des Formens eines ersten Teils des Formmaterials zu den Naben, und des Formens eines zweiten Teils des Formmaterials zu der Kassettenhülle umfaßt, **dadurch gekennzeichnet**, daß
der Metallbestandteil des Materials, das Metallpulver enthält, ein Material ist, dessen Schmelztemperatur der Schmelztemperatur des Harzmaterials entspricht oder darunter liegt.

5. Verfahren nach Anspruch 4, wobei es sich bei dem Harzmaterial um Polystyrolharz handelt und es sich bei dem Metallpulver um Bi(56)-Sn(40)-Zn(4)-Pulver handelt.

6. Verfahren nach Anspruch 4, wobei das Harzmaterial wenigstens einen Zusatz enthält, der aus der Gruppe ausgewählt wird, die aus einem Mittel zur Verhinderung von elektrischer Ladung, einem Mittel zur Verhinderung von Oxidation, einem Dispersionsmittel und einem Schmiermittel besteht.

## Revendications

1. Cassette (121) de bande magnétique, du type qui comprend une enveloppe (121a ; 121b) de cassette, deux moyeux (123) montés afin qu'ils tournent dans l'enveloppe de cassette, et une bande magnétique qui s'enroule autour des moyeux, les moyeux et l'enveloppe étant moulés en un matériau de moulage qui contient un matériau à base de résine et un matériau contenant un métal pulvérisé,
caractérisée en ce que
l'ingrédient métallique du matériau contenant un métal est un métal dont la température de fusion est égale ou inférieure à la température du fusion du matériau à base d'une résine.

2. Cassette de bande magnétique selon la revendication 1, dans laquelle le matériau à base d'une résine est une résine de polystyrol et le métal pulvérisé est l'alliage Bi(56)-Sn(40)-Zn(4) pulvérisé.

3. Cassette de bande magnétique selon la revendication 1, dans laquelle le matériau à base de résine contient au moins un adjuvant choisi dans le groupe qui comprend un agent de prévention de charge électrique, un agent contre l'oxydation, un agent dispersant et un agent lubrifiant.

4. Procédé de moulage d'une cassette de bande magnétique dans laquelle une bande magnétique est enroulée autour de deux moyeux qui sont montés afin qu'ils puissent tourner dans une enveloppe de cassette, le procédé comprenant des étapes de mélange d'une quantité prédéterminée d'un matériau contenant un métal pulvérisé à une quantité prédéterminée d'un matériau à base de résine pour la constitution d'un matériau de moulage, de chauffage du matériau de moulage à un état fondu, de formation d'une première partie du matériau de moulage à la configuration des moyeux, et de formation d'une seconde partie du matériau de moulage à la configuration de l'enveloppe de cassette,
caractérisé en ce que
l'ingrédient métallique du matériau contenant un métal pulvérisé est un métal dont la température de fusion est égale ou inférieure à la température de fusion du matériau à base de résine.

5. Procédé selon la revendication 4, dans lequel le matériau à base de résine est une résine de polystyrol, et le métal pulvérisé est l'alliage Bi(56)-Sn(40)-Zn(4) pulvérisé.

6. Procédé selon la revendication 4, dans lequel le matériau à base de résine contient au moins un adjuvant choisi dans le groupe constitué par un agent de prévention de charge électrique, un agent contre l'oxydation, un agent dispersant et un agent lubrifiant.
